# EUROPEAN PATENT APPLICATION

(11) **EP 1 385 229 A1**
(43) Date of publication of application: **28.01.2004**
(21) Application number: 02255221.0
(22) Date of filing: 26.07.2002
(51) Int. Cl.: H01M 12/06, H01M 4/42

(54) **Granular anode for metal-air fuel cell battery**

(71) Applicant: Lin, Yung-Jen, Taipei, Taiwan 114 (TW)
(72) Inventor: Lin, Yung-Jen, Taipei, Taiwan 114 (TW)
(74) Representative: Dearing-Lambert, Peter Richard

(57) **Abstract**

A granular zinc fuel structure for deposition in an anode container includes a hollow outer casing (20) defining an interior space filled with electrolyte (21). An interior zinc fuel structure in the form of a radial structure (24) or a honeycomb structure (25) or simply comprised of a number of arcuate pieces of zinc (23) is selectively arranged inside the casing. An aperture (22) is defined in the casing (20) and in communication with the interior space wherein when the granular zinc fuel is deposited in the anode container and in contact with the electrolyte (21) of the container to allow for a reaction therebetween, the electrolyte inside the interior space of the casing is allowed to mix with the electrolyte of the container to enhance the reaction. The granular fuel structure is alternatively comprised of a porous body made of zinc, forming a number of voids (26) for containing an electrolyte (21). The casing is further alternatively made by attaching two halves (27a, 27b) together with openings (28a, 28b) defined therebetween.

## Description

### BACKGROUND OF THE INVENTION

### 1. Field of the Invention

The present invention relates generally to a metal-air battery, and in particular to a granular anode of a zinc-air battery.

### 2. Description of the Prior Art

Batteries have been developed and widely used in a variety of fields. A variety of batteries are currently available for different applications. Among the known batteries, emphasis has been placed on the zinc-air battery because of its high energy density and potential long service life. The overall reaction of a zinc-air battery is oxidation of zinc with oxygen of the ambient air which releases energy.

In one known zinc-air battery, metal zinc, which is the fuel of the battery, is made in the form of a plate, serving as anode electrode. Air containing oxygen flows through a cathode plate into electrolyte of the battery in which the zinc plate is placed to cause the oxidation reaction. The battery can be regenerated by replacing the electrolyte and the zinc plate.

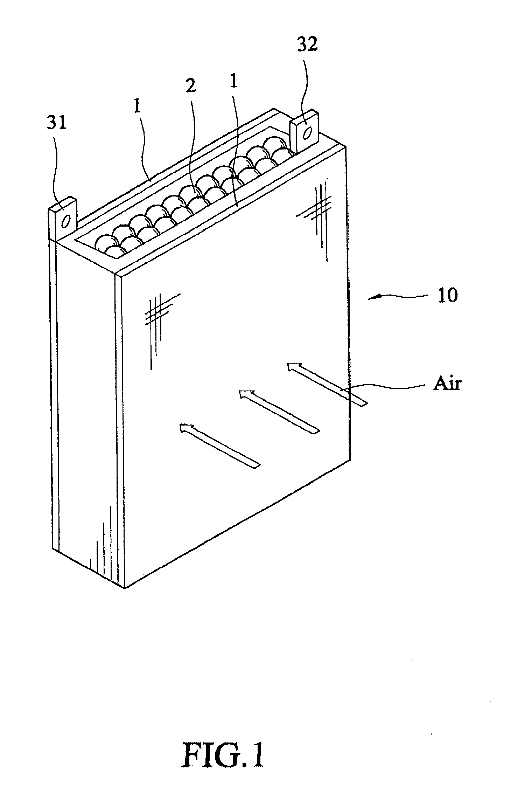

In another known zinc-air battery, metal zinc is made in granular form, serving as an anode electrode of the battery. Figure 1 of the attached drawings shows such a zinc-air battery, generally designated with reference numeral 10, comprising two cathode plates 1 sandwiching a container containing granular zinc 2. Air flows through the cathode plates 1 into the container to react with the granular zinc 2 wherein the zinc, serving as a fuel for the battery, is consumed during the reaction. Both anode and cathode are provided with terminals 31, 32 for external connection. The regeneration of the zinc-air battery can be done by replacing or replenishing the granular zinc.

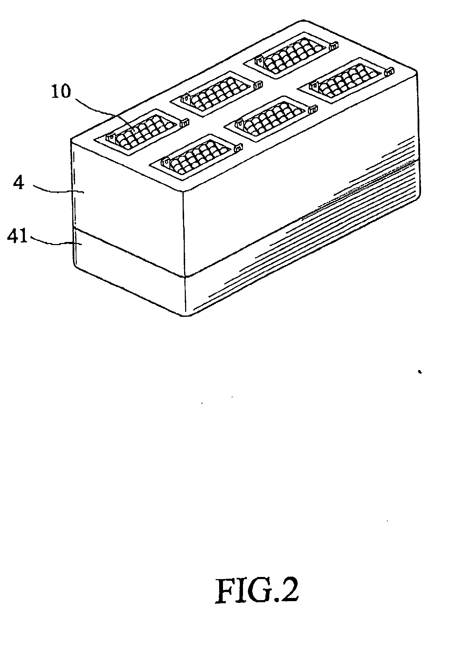

Figure 2 shows a battery system comprises a number of zinc-air batteries 10 fixed together by a frame 4. The batteries 10 are electrically connected together to provide a large power. A tray 41 is placed under the frame 4 for collecting reaction products and debris.

Since the power generated by the battery or battery system is dependent upon the reaction rate of the battery, it is a major concern of the field to enhance the reaction of the battery in order to improve the performance of the zinc-air battery.

### SUMMARY OF THE INVENTION

Thus, a primary object of the present invention is to provide a granular zinc fuel serving as an anode of a metal-air battery for enhancing the reaction of the battery by increasing contact area between the zinc fuel and electrolyte and for allowing for ready replacement of the zinc fuel.

To achieve the above object, in accordance with the present invention, there is provided a granular zinc fuel structure for deposition in an anode container containing an electrolyte of a zinc-air battery to serve as an anode of the battery. The zinc fuel structure comprises a hollow outer casing defining an interior space filled with an electrolyte. An interior zinc fuel structure in the form of a radial structure or a honeycomb structure or simply comprised of a number of arcuate pieces of zinc is selectively arranged inside the casing and in contact with the electrolyte inside the casing. An aperture is defined in the casing and in communication with the interior space wherein when the granular zinc fuel is deposited in the anode container and in contact with the electrolyte of the container to allow for a reaction therebetween, the electrolyte inside the interior space of the casing is allowed to mix with the electrolyte of the container to enhance the reaction. The granular fuel structure can be alternatively comprised of a porous body made of zinc, forming a number of voids for containing an electrolyte. The casing can be made by attaching two halves together with openings defined therebetween.

### BRIEF DESCRIPTION OF THE DRAWINGS

The present invention will be apparent to those skilled in the art by reading the following description of preferred embodiments thereof, with reference to the attached drawings, in which:
Figure 1 is a perspective view of a conventional zinc-air battery;
Figure 2 is a perspective view of a conventional zinc-air battery system comprising a number of zinc-air cells;
Figure 3 is a cross-sectional view of a granular zinc fuel constructed in accordance with a first embodiment of the present invention;
Figure 4 is a cross-sectional view of a granular zinc fuel constructed in accordance with a second embodiment of the present invention;
Figure 5 is a cross-sectional view of a granular zinc fuel constructed in accordance with a third embodiment of the present invention;
Figure 6 is a cross-sectional view of a granular zinc fuel constructed in accordance with a fourth embodiment of the present invention;
Figure 7 is a cross-sectional view of a granular zinc fuel constructed in accordance with a fifth embodiment of the present invention;
Figure 8A is a perspective view of a granular zinc fuel constructed in accordance with a sixth embodiment of the present invention;
Figure 8B is an exploded view of the granular zinc fuel in accordance with the sixth embodiment of the present invention; and
Figure 8C is a cross-sectional view taken along line A-A of Figure 8A.

### DETAILED DESCRIPTION OF THE PREFERRED EMBODIMENTS

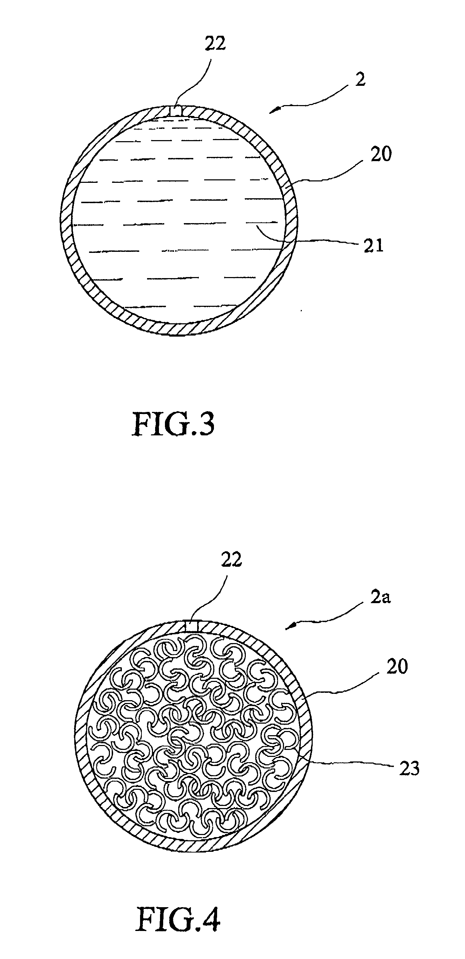

With reference to the drawings and in particular to Figure 3, a granular zinc fuel constructed in accordance with a first embodiment of the present invention is shown. The granular zinc fuel constitutes partly an anode of a zinc-air battery (not shown but similar to the one shown in Figure 1). The anode of the zinc-battery comprises a container inside which an electrolyte is filled. The granular zinc fuel of the present invention is deposited in the container for contact with the electrolyte in order to carry out desired chemical reaction to release energy. In accordance with the present invention, the zinc fuel, which is generally designated with reference numeral 2, is comprised of a hollow spherical outer casing 20 made of zinc enclosing an electrolyte 21 therein. An aperture 22 is formed in the casing 20 having a size not allowing the electrolyte to leak therethrough by means of pressure difference.

When the granular zinc fuel 2 is deposited into the electrolyte container of the anode of the xinc-air battery, the outer casing 20 reacts with the electrolyte inside the container. The reaction starts at the aperture 22 which enlarges the aperture 22 and eventually, the electrolyte 21 inside the casing 20 is allowed to communicate and mix with the electrolyte of the anode container (that is the electrolyte outside the casing 20). The communication between the electrolytes inside and outside the casing 20 effectively increases the contact area between the electrolyte and the zinc fuel thereby enhancing the reaction therebetween.

Figure 4 shows a granular zinc fuel in accordance with a second embodiment of the present invention, generally designated with reference numeral 2a, comprising a spherical outer casing 20 made of zinc inside which an electrolyte (not labeled in Figure 4) is filled. A number of tiny pieces of zinc 23 having an arcuate or irregular configuration are contained in the casing 20 and mixed with the electrolyte. Free spaces are formed between the tiny pieces 23 for accommodating the electrolyte. An aperture 22 is formed in the casing 20. Similar to the first embodiment with reference to Figure 3, when the granular zinc fuel 2a is deposited in an anode container and contacts an electrolyte inside the anode container, a reaction between the electrolyte and the zinc fuel starts. When the aperture 22 is enlarged sufficiently, the electrolyte inside the casing and that outside the casing are mixed with each other thereby enhancing the reaction. The tiny pieces of zinc 23 inside the casing 20 also serves as zinc fuel and is consumed during the reaction.

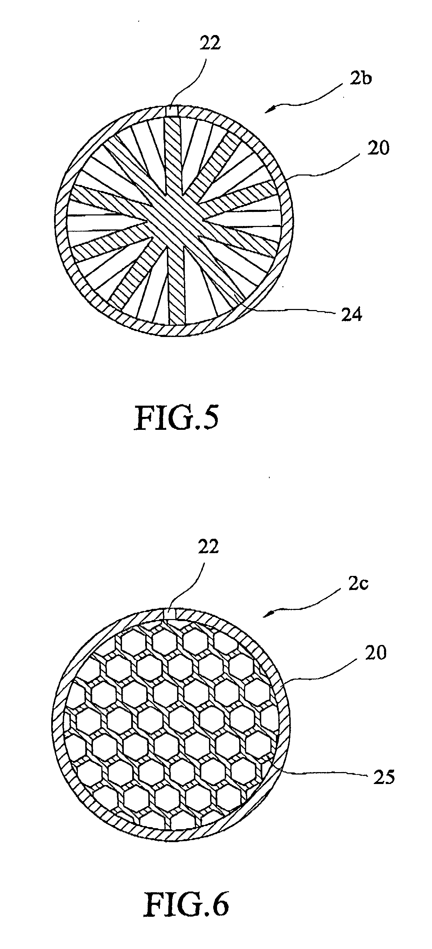

Figure 5 shows a granular zinc fuel in accordance with a third embodiment of the present invention, generally designated with reference numeral 2b, comprising a spherical outer casing 20 made of zinc inside which an electrolyte (not labeled in Figure 5) is filled. A radial structure 24 made of zinc comprising a number of radially-extending arms (not labeled) is arranged inside the casing 20 and in contact with the electrolyte inside the casing 20. An aperture 22 is formed in the casing 20. Similar to the first embodiment with reference to Figure 3, when the granular zinc fuel 2b is deposited in an anode container and contacts an electrolyte inside the anode container, a reaction between the electrolyte and the zinc fuel starts. When the aperture 22 is enlarged sufficiently, the electrolyte inside the casing and that outside the casing are mixed with each other thereby enhancing the reaction. The radial structure 24 inside the casing 20 also serves as zinc fuel and is consumed during the reaction.

Figure 6 shows a granular zinc fuel in accordance with a fourth embodiment of the present invention, generally designated with reference numeral 2c, comprising a spherical outer casing 20 made of zinc inside which an electrolyte (not labeled in Figure 5) is filled. A honeycomb structure 25 made of zinc is arranged inside the casing 20 and in contact with the electrolyte inside the casing 20. An aperture 22 is formed in the casing 20. Similar to the first embodiment with reference to Figure 3, when the granular zinc fuel 2c is deposited in an anode container and contacts an electrolyte inside the anode container, a reaction between the electrolyte and the zinc fuel starts. When the aperture 22 is enlarged sufficiently, the electrolyte inside the casing and that outside the casing are mixed with each other thereby enhancing the reaction. The honeycomb structure 25 inside the casing 20 also serves as zinc fuel and is consumed during the reaction.

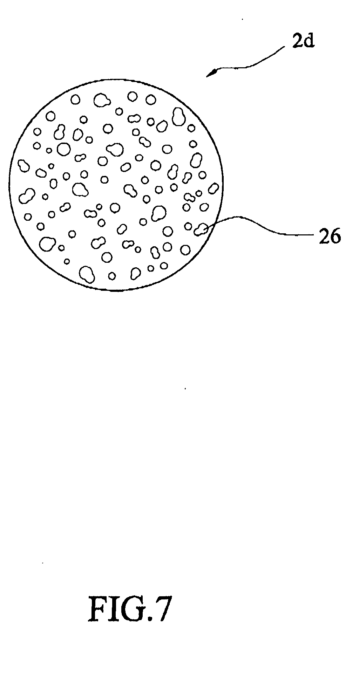

Figure 7 shows a granular zinc fuel in accordance with a fifth embodiment of the present invention, generally designated with reference numeral 2d, comprising porous body inside which a number of void areas 26 are formed. The voids can be selectively connected to each other. Electrolyte is filled or can be filled in the voids 26, If desired, the porous body can be encased in an outer casing made of zinc, similar to the embodiment discussed previously.

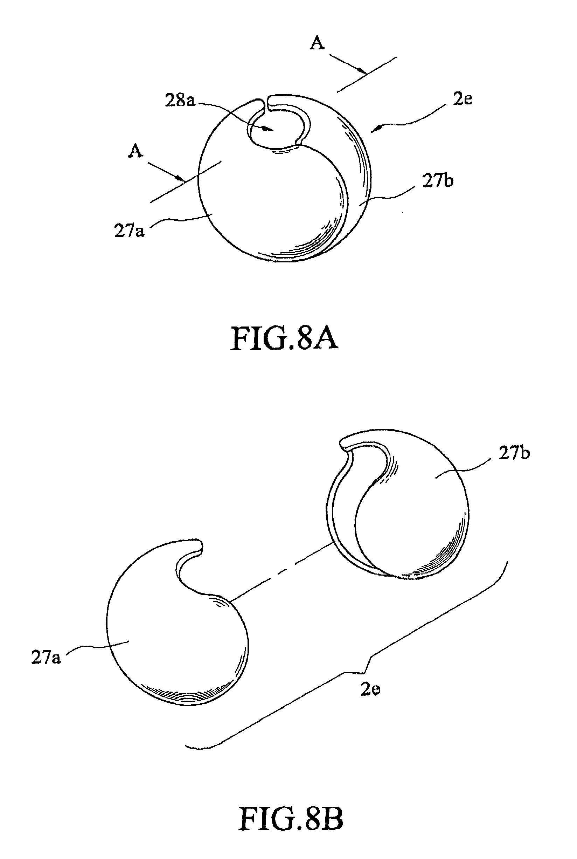

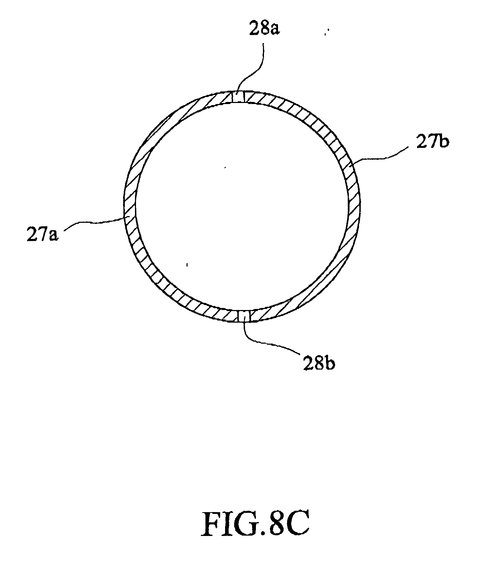

Figures 8A, 8B and 8C show a granular zinc fuel in accordance with a sixth embodiment of the present invention, generally designated with reference numeral 2e, comprising two halves 27a, 27b attached to each other forming a spherical body. Openings 28a, 28b are defined in upper and lower sides of the spherical body.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A granular zinc fuel structure adapted to be deposited in an anode container containing an electrolyte of a zinc-air battery (10) as an anode, **characterized in that** the zinc fuel structure (2a, 2b, 2c) comprises a hollow outer casing (20) defining an interior space filled with an electrolyte (21), an interior zinc fuel structure being deposited inside the casing (20) and in contact with the electrolyte (21) inside the casing (20), an aperture (22) being defined in the casing (20) and in communication with the interior space wherein when the granular zinc fuel (2, 2a, 2b, 2c) is deposited in the anode container and in contact with the electrolyte (21) of the container to allow for a reaction therebetween, the electrolyte (21) inside the interior space of the casing (20) is allowed to mix with the electrolyte (21) of the container to enhance the reaction.

2. The granular zinc fuel structure as claimed in Claim 1, wherein the casing (20) is made of a material the same as the interior zinc fuel structure.

3. The granular zinc fuel structure as claimed in Claim 1, wherein the interior zinc fuel structure (2a) comprises tiny pieces of zinc having arcuate configuration (23) forming free spaces therebetween.

4. The granular zinc fuel structure as claimed in Claim 1, wherein the interior zinc fuel structure (2b) comprises a radial structure comprising a number of radially-extending arms (24).

5. The granular zinc fuel structure as claimed in Claim 1, wherein the interior zinc fuel structure (2c) comprises a honeycomb structure (25).

6. A granular zinc fuel structure adapted to be deposited in an anode container containing an electrolyte (21) of a zinc-air battery (10) as an anode, **characterized in that** the zinc fuel structure (2, 2e) comprises a hollow outer casing (20) defining an interior space filled with an electrolyte (21), an aperture (22) being defined in the casing (20) and in communication with the interior space wherein when the granular zinc fuel (2, 2e) is deposited in an anode container and in contact with the electrolyte (21) of the container to allow for a reaction therebetween, the electrolyte (21) inside the interior space of the casing (20) is allowed to mix with the electrolyte (21) of the container to enhance the reaction.

7. The granular zinc fuel structure as claimed in Claim 6, wherein the outer casing (20) comprises two halves (27a, 27b) attached to each other to form a substantially spherical body (2e), openings (28a, 28b) being defined in upper and lower sides of the body (2e).

8. A granular zinc fuel structure adapted to be deposited in an anode container containing an electrolyte (21) of a zinc-air battery (10) as an anode, **characterized in that** the zinc fuel structure (2d) comprises a porous body forming a plurality of voids (26) therein for containing an electrolyte (21) wherein when the granular zinc fuel (2d) is deposited in an anode container and in contact with the electrolyte (21) of the container to allow for a reaction therebetween, the electrolyte (21) inside the voids (2d) is allowed to mix with the electrolyte (21) of the container to enhance the reaction.

9. The granular zinc fuel structure as claimed in Claim 8, wherein the voids (2e) are connected to each other.
